# EUROPÄISCHE PATENTANMELDUNG

(11) **EP 1 908 569 A1**
(43) Veröffentlichungstag der Anmeldung: **09.04.2008**
(21) Anmeldenummer: 07450170.1
(22) Anmeldetag: 01.10.2007
(51) Int. Cl.: B29C 47/76, B29C 47/92, B29C 47/82

(54) **Extrusionsvorrichtung mit einer Waage zum Extrudieren von thermoplastischem Kunststoffgranulat**

(30) Priorität: 05.10.2006 AT 16692006
(71) Anmelder: SCHULZ, Helmuth, 4020 Linz (AT)
(72) Erfinder: Schulz, Helmuth, Ing., 4020 Linz (AT); Schwenz, Engelbert, 49424 Goldenstedt (DE); Anglberger, Herbert, 4581 Rosenau (AT)
(74) Vertreter: Hübscher, Helmut

(57) **Zusammenfassung**

Die Erfindung betrifft eine Vorrichtung zum Extrudieren von thermoplastischem Kunststoffgut, mit einer in einem Gehäuse (1) gelagerten Extruderschnecke (2), die einen zulaufseitigen Plastifizierungsabschnitt (P) und einen einem Austragsabschnitt (A) vorgelagerten Entgasungsabschnitt (E) umfaßt, mit einem Meßbehälter (9) für das Kunststoffgut und mit einer Steuereinrichtung (6). Um die Entgasungsleistung der Vorrichtung an das zu verarbeitende Kunststoffgranulat rasch einstellen zu können, wird vorgeschlagen, daß dem dem Extruder nachgeordneten Meßbehälter (6) eine Waage (10) zur Bestimmung des Schüttgewichtes des vom Extruder (1) produzierten Kunststoffgranulates zugehört und daß die Steuereinrichtung (6) den Extruder (1) in Abhängigkeit des jeweils ermittelten Schüttgewichtes zwecks Einstellung der zur Erzielung einer gewünschten Entgasungsleistung erforderlichen Parameter ansteuert.

## Beschreibung

Die Erfindung betrifft eine Vorrichtung zum Extrudieren von thermoplastischem Kunststoffgut, mit einer in einem Gehäuse gelagerten Extruderschnecke, die einen zulaufseitigen Plastifizierungsabschnitt und einen einem Austragsabschnitt vorgelagerten Entgasungsabschnitt umfaßt, mit einem Meßbehälter für das Kunststoffgut und mit einer Steuereinrichtung.

Bei einer derartigen bekannten Vorrichtung (DE 39 13 808 A1) wird der Meßbehälter dazu verwendet, den Füllstand der Extruderzufuhr zu überwachen. Der Füllstand im Meßbehälter wird von Fühlern erfaßt, wobei bei absinkendem Füllstand die dem Meßbehälter zugeführte Menge pro Zeiteinheit erhöht und bei steigendem Füllstand mit stetiger Geschwindigkeitsabnahme vermindert wird. Da sich die Dichte oder das Gewicht der zugeführten Komponenten des Kunststoffgutes über die Zeit oder aber auch bei einem Chargenwechsel ändern können, kann es erforderlich sein, die Komponenten der Mischung bzw. das Kunststoffgut zu wiegen und/oder zu messen, um gewünschte Mischungsverhältnisse möglichst exakt einstellen zu können. Dazu wird der Meßbehälter zuerst bis zu einer maximalen Füllmenge befüllt und anschließend das Kunststoffgut für eine vorbestimmte Dauer anstatt in den Meßbehälter in diverse Auffangbehälter eingeleitet, wonach es wieder in den Meßbehälter eingebracht wird. Anschließend kann das Gewicht der in die Behälter eingebrachten Materialien vom Bedienpersonal gewogen und anschließend das Mischungsverhältnis im entsprechenden Ausmaß nachjustiert werden.

Weiters ist es bekannt, daß sich bei der Aufbereitung von Kunststoffen aus Produktionsabfall bzw. aus bereits im Umlauf gewesenem Kunststoffmaterial durch die Bedruckung, Lackierung oder Verschmutzung das Erfordernis ergibt, diese Kunststoffe vor einer Wiederverwertung von diesen Verunreinigungen zu befreien. Dazu ist es gemäß der WO 93/04841 A1 vorgesehen, den aufzubereitenden Kunststoff in einem Extruder aufzuschmelzen, durch einen Filter zu drücken und vor einer Weiterverarbeitung bzw. einer Granulierung zu entgasen. Die Stärke der Ausgasung ist dabei insbesondere vom Grad der Verschmutzung bzw. vom Anteil der Bedruckung, Lackierung oder Verschmutzung abhängig und variiert bei der Aufbereitung von bereits verwendeten Kunststoffen naturgemäß über große Bereiche, wodurch kaum eine gleichbleibende Qualität des entgasten und gereinigten Kunststoffes gewährleistet werden kann. Zudem kann es durch übermäßige Ausgasungen, beispielsweise durch Feuchtigkeit im Kunststoff, zu Druckschwankungen in der Vorrichtung kommen, was wiederum die Qualität des Kunststoffes beeinträchtigt.

Ausgehend von einem Stand der Technik der eingangs geschilderten Art liegt der Erfindung die Aufgabe zugrunde, die oben genannten Nachteile zu vermeiden und eine Vorrichtung mit verbessertem Entgasungseffekt zu schaffen, mit der eine möglichst gleichbleibende Kunststoffqualität gewährleistet werden kann und es mit einfachen Mitteln ermöglicht wird ein gasblasenfreies Granulat zu produzieren.

Die Erfindung löst diese Aufgabe dadurch, daß dem dem Extruder nachgeordneten Meßbehälter eine Waage zur Bestimmung des Schüttgewichtes des vom Extruder produzierten Kunststoffgranulates zugehört und daß die Steuereinrichtung den Extruder in Abhängigkeit des jeweils ermittelten Schüttgewichtes zwecks Einstellung der zur Erzielung einer gewünschten Entgasungsleistung erforderlichen Parameter ansteuert.

Mit dem Vorsehen der stetigen oder periodischen Schüttgewichtsmessung für das vom Extruder produzierte Kunststoffgranulat erfolgt eine nahezu lückenlose Überwachung des Schüttgewichtes und kann auf etwaige Schwankungen im Schüttgewicht, die als Indikator für Gaseinschlüsse im Kunststoffgranulat dienen, unmittelbar von der Steuereinrichtung reagiert und die Entgasungsleistung des Extruders entsprechend nachjustiert werden. Glasblasenfreies Granulat aus Polyethylen hat beispielsweise ein Schüttgewicht von rund 0,56 kg/dm³ und mehr. Sollte die Messung des Schüttgewichtes weniger ergeben, wird der Extruder im Sinne einer Erhöhung der Entgasungsleistung angesteuert. Dies kann beispielsweise durch Verringern der Kunststoffgranulatzufuhr zum Extruder und/oder durch Erhöhen der Verweildauer des Kunststoffes im Extruder erfolgen. Zudem kann eine zusätzliche Heiz- bzw Kühleinrichtung vorgesehen sowie die Vakuumleistung einer an den Entgasungsabschnitt angeschlossenen Vakuumpumpe erhöht werden. Dabei ist allerdings stets zu beachten, daß das aufgeschmolzene Kunststoffgut nicht zulange bei übermäßigen Temperaturen im Extruder verweilt, um eine Zerstörung des Kunststoffes zu vermeiden. Sollte die Messung ergeben, daß das Material für eine Weiterverarbeitung ungeeignet ist, wird es dem Extruder vorzugsweise erneut zur Aufbereitung zugeführt bzw. ausgeschieden.

Besonders einfache Konstruktionsverhältnisse ergeben sich, wenn der nach unten offene Meßbehälter bodenseitig mit einem von der Steuereinrichtung betätigbaren Verschluß ausgestattet ist. Der Meßbehälter kann somit nach einem Befüllen und nach erfolgter Messung des Schüttgewichtes des Füllgutes in einfacher Weise rasch entleert werden. Soll ein definiertes Volumen zur Messung herangezogen werden, empfiehlt es sich der Meßbehältereinfüllöffnung eine Abstreifeinrichtung zuzuordnen, die bei Ansteuerung durch die Steuereinrichtung den oberen Behälterrand überragendes Kunststoffgranulat entfernt. Wird der Meßbehälter für eine Messung befüllt, und das den Behälterrand überragende Kunststoffgranulat anschließend entfernt, so ist gewährleistet, daß stets das gleiche Volumen zur Gewichtmessung herangezogen wird. Grundsätzlich wäre es allerdings auch möglich das Kunststoffgranulat dem Meßbehälter zuzuführen, das Gewicht zu bestimmen sowie den Füllstand des Kunststoffgranulates im Meßbehälter mit geeigneten Füllstandssensoren zu vermessen und anschließend aus Gewicht und Volumen das Schüttgewicht zu bestimmen.

Um den kontinuierlichen Materialaustrag des Extruders durch den Meßvorgang nicht zu beeinträchtigen, empfiehlt es sich, wenn der Meßbehälter neben einem Transportkanal für das produzierte Kunststoffgranulat angeordnet ist, wobei im Transportkanal eine von der Steuereinrichtung ansteuerbare Weiche vorgesehen ist, deren Abzweigung in den Meßbehälter mündet. So kann wahlweise nicht nur der gesamte Kunststoffstrom in den Meßbehälter gleitet, sondern auch lediglich ein Teilstrom vom Transportkanal abgezweigt und in den Meßbehälter eingeleitet werden.

Um Kunststoffgranulat mit Gaseinschlüssen gegebenenfalls automatisiert erneut dem Extruder zur Aufbereitung zuführen zu können, münden der Behälterauslaß und der Transportkanal für das Kunststoffgranulat vorzugsweise über eine Weiche in eine gemeinsame Aufgabevorrichtung des Extruders, wobei die Weiche zwischen Meßbehälterauslaß und Transportkanal einerseits sowie Aufgabevorrichtung anderseits vorgesehen ist. Für die Weiterverarbeitung ungeeignetes Kunststoffgranulat kann über diese Weiche auch ausgeschieden werden.

Anstelle der Anordnung des Meßbehälters neben dem Transportkanal für das Kunststoffgranulat, kann der Meßbehälter auch im Transportkanal vorgesehen sein, wobei in diesem Fall ein Teil des durch den Transportkanal geleiteten Kunststoffgranulates bei nach oben offenem Meßbehälter in den Meßbehälter eingeleitet wird. Wird der Meßbehälter beispielsweise mit einer vom Meßbehälter entkoppelten Abstreifeinrichtung verschlossen, kann die Messung ungehindert vom vorbeiströmenden Kunststoffgranulat vorgenommen werden.

Grundsätzlich empfiehlt es sich, wenn der Außenmantel des Meßbehälters nach unten hinten stromlinienförmig ausgebildet ist, um ein Aufruhen von Granulaten am Meßbehälter außerhalb des Meßvolumens zu vermeiden. Ebenso deckt dieser Mantel diverse Steuereinrichtungen und Meßeinrichtungen ab und schützt diese vor Verunreinigungen durch das Kunststoffgranulat.

Um ein Verstopfen des Meßbehälters zu vermeiden und um möglichst gute Meßergebnisse erzielen zu können, kann dem Meßbehälter sowohl außen als auch innen eine Ausblaseinrichtung zugehören, mit der der Meßbehälter vor bzw. nach jedem Meßvorgang abgeblasen und gereinigt werden kann.

Ein Verfahren zum Betreiben einer erfindungsgemäßen Vorrichtung zeichnet sich dadurch aus, daß zumindest ein Teil des vom Extruder produzierten Kunststoffgranulates in den Meßbehälter eingeleitet, das jeweilige Schüttgewicht bestimmt und anschließend die Beschickungseinrichtung für den Extruder, die Drehzahl der Extruderschnecke, die Heizvorrichtung des Exruders und gegebenenfalls eine dem Entgasungsabschnitt zugeordnete Vakuumpumpe in Abhängigkeit des gemessenen Schüttgewichtes zwecks Einstellung der benötigten Entgasungsleistung angesteuert werden. Durch diese periodische Schüttgewichtsmessung wird ein Kontrollsystem für die Verarbeitung von Kunststoffgranulat geschaffen, das insbesondere bei der Wiederaufbereitung von Kunststoffabfällen die Möglichkeit bietet mit einfachen Mitteln ein gasblasenfreies Granulat zu produzieren bzw. die Qualität des produzierten Granulates zu überwachen. Weicht der gemessen Wert von einem vorgegebenen Schüttgewicht ab, kann die Befüllung des Extruders reduziert werden, so daß in der Vakuumzone des Extruders weniger Material transportiert wird und somit die Entgasungsleistung erhöht wird bzw. die Saugleistung der Vakuumpumpe erhöht werden. Dabei erfolgt naturgemäß stets eine Überwachung der Schmelzentemperatur und gegebenenfalls eine Ansteuerung einer Heiz- bzw. Kühleinrichtung des Extruders, womit unter anderem ein Überhitzen des Kunststoffes vermieden bzw. das Kunststoffgranulat auf eine gewünschte Verarbeitungstemperatur gebracht werden kann.

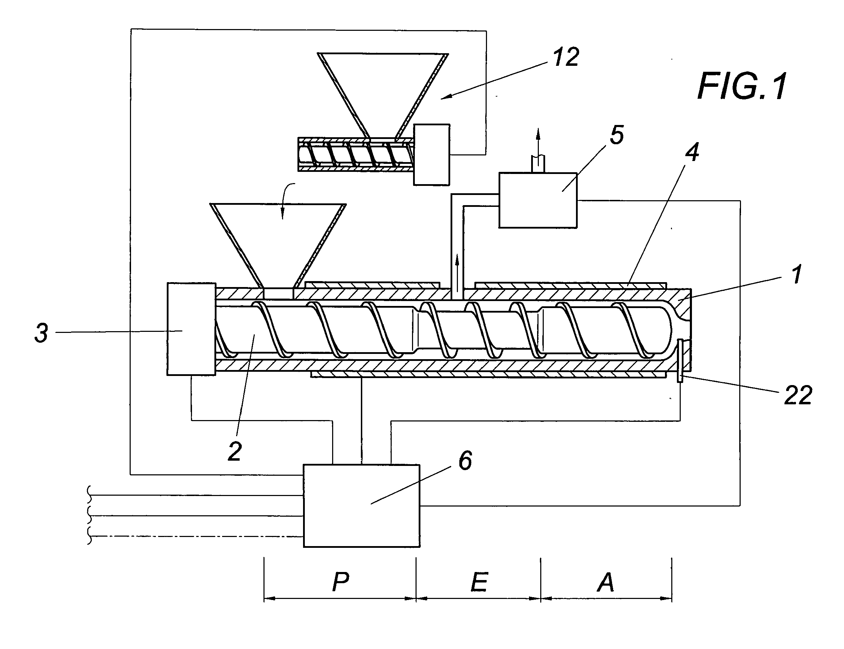

In der Zeichnung ist die Erfindung anhand eines Ausführungsbeispieles schematisch dargestellt. Es zeigen
- Fig. 1: einen Extruder zur Aufbereitung von thermoplastischem Kunststoffgut und

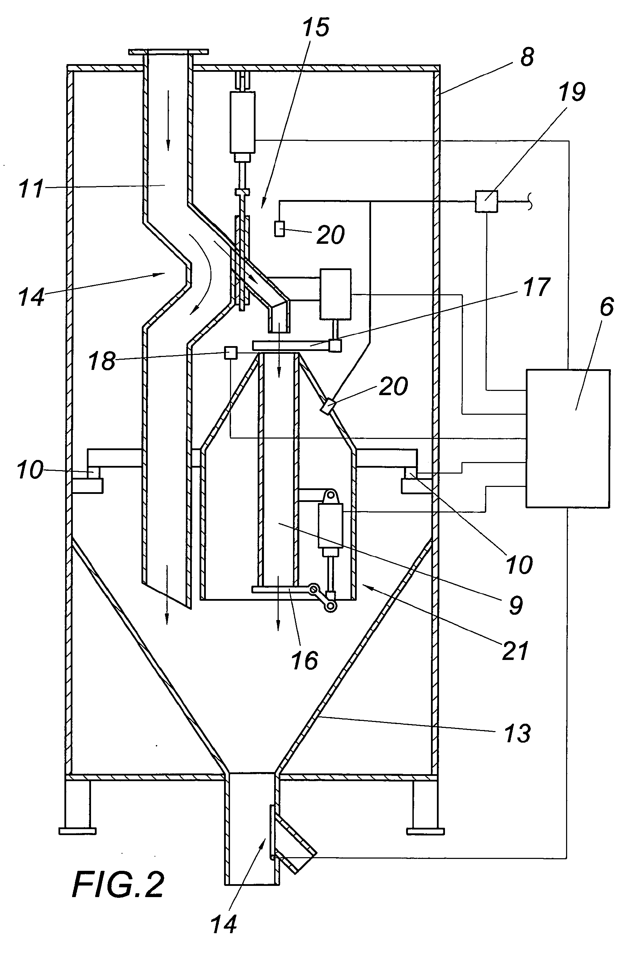

- Fig. 2: eine Vorrichtung zur periodischen Schüttgewichtsmessung des vom Extruder produzierten Kunststoffgranulates im Querschnitt.

Eine Vorrichtung zum Extrudieren von thermoplastischem Kunststoffgranulat umfaßt eine in einem Gehäuse 1 gelagerte Extruderschnecke 2 die einen zulaufseitigen Plastifizierungsabschnitt P und einen einem Austragsabschnitt A vorgelagerten Entgasungsabschnitt E umfaßt. Des weitern gehört dem Extruder 1 ein Drehantrieb 3, eine Heiz- bzw. Kühleinrichtung 4, eine an den Entgasungsabschnitt E angeschlossene Vakuumpumpe 5 sowie eine Steuereinrichtung 6 zu. Gegebenenfalls vorzusehende Schmelzenfilter sind im vorliegenden Ausführungsbeispiel nicht dargestellt. Das vom Extruder 1 produzierte Kunststoffgranulat, beispielsweise Kunststoffabfall od. dgl. wird über eine Schüttgewichtsmeßstation 8 geleitet, die einen Meßbehälter 9 für das vom Extruder 1 produzierte Kunststoffgranulat umfaßt.

Dem Meßbehälter 6 gehört eine Waage 10 zur Bestimmung des Schüttgewichtes des vom Extruder 1 produzierten Kunststoffgranulates zu. Die Waage 10 wird im dargestellten Ausführungsbeispiel von an die Steuereinrichtung 6 angeschlossenen Kraftaufnehmern gebildet. Um eine gleichbleibende Qualität des vom Extruder produzierten Kunststoffgranulates zu gewährleisten, steuert die Steuereinrichtung 6 den Extruder 1 in Abhängigkeit des jeweils ermittelten Schüttgewichtes zwecks Einstellung der erforderlichen Entgasungsleistung an. Der Meßbehälter 9 ist nach unten offen ausgebildet und mündet gemeinsam mit einem Transportkanal 11 für das Kunststoffgranulat einen Trichter 13 in eine Aufgabevorrichtung 12 für den Extruder 1. Zwischen dem Meßbehälterauslaß und Transportkanal 11 einerseits sowie Aufgabevorrichtung 12 anderseits ist eine Weiche 14 zum Ausscheiden von Kunststoffgranulat mit Gaseinschlüssen vorgesehen.

Der Meßbehälter 9 ist neben dem Transportkanal 11 für das Kunststoffgranulat angeordnet, wobei der Transportkanal 11 eine Biegung 15 aufweist, der eine von der Steuereinrichtung 6 ansteuerbare Weiche 14 zugehört, die im geöffnetem Zustand einen Teilstrom des im Transportkanal 11 geführten Kunststoffgranulates dem Meßbehälter 9 zuführt. Der Meßbehälter 9 ist bodenseitig mit einem von der Steuereinrichtung 6 betätigbaren Verschluß 16 ausgestattet und der Behältereinfüllöffnung gehört eine Abstreifeinrichtung 17 zu, die bei Ansteuerung durch die Steuereinrichtung 9 den oberen Meßbehälterrand überragendes Kunststoffgranulat entfernt. Zur Überwachung der Füllstandshöhe im Meßbehälter 9 ist ein Füllstandsensor 18 und zur Reinigung des Meßbehälters 9 ist eine Ausblaseinrichtung 19 mit diversen Ausblasdüsen 20 vorgesehen. Der Meßbehältermantel 21 ist samt Aufhängung nach unten hin strömungslinienförmig ausgebildet um ein Aufliegen von Kunststoffgranulat zu vermeiden, welches das Meßergebnis verfälschen würde.

Das aufzubereitende Kunststoffgranulat wird über die Aufgabevorrichtung 12, welche insbesondere als Materialpuffer dient, in den Extruder 1 aufgegeben. Von dem vom Extruder produzierten Kunststoffgranulat wird ein Teil in periodischen Abständen über die Weiche 15 abgezweigt und in den nach unten mit dem Verschluß 16 verschlossenen Meßbehälter 9 eingeleitet. Detektiert der Füllstandsensor 18 den Maximalfüllstand des Behälters wird die Weiche 15 geschlossen und über den oberen Behälterrand ragendes Kunststoffgranulat mit der Abstreifeinrichtung 17 entfernt. Anstatt des Abstreifers könnte allerdings eine Abblaseinrichtung od. dgl. vorgesehen sein. Nach erfolgter Messung wird der Verschluß 16 von der Steuereinrichtung geöffnet, der Meßbehälter 9 innen sowie außen mit der Ausblaseinrichtung 19 abgeblasen und die Waage 10 gegebenenfalls neu geeicht. Anschließend ist diese Vorrichtung für eine erneute Vorrichtung bereit.

Ist das gemessene Kunststoffgranulat für eine Weiterverarbeitung ungeeignet, da es Gaseinschlüsse oder Verunreinigungen aufweist, wird es dem Extruder über die Weiche 14 gegebenenfalls erneut zugeführt oder aus der Verarbeitung ausgeschieden. Anschließend werden die Beschickungseinrichtung 12 für den Extruder, die Drehzahl der Extruderschnecke über den Drehantrieb 3, die Heiz- bzw. Kühlvorrichtung 4 des Extruders 1 und die Vakuumpumpe 5 in Abhängigkeit des gemessenen Schüttgewichtes zwecks Einstellung der benötigten Entgasungsleistung von der Steuereinrichtung 6 angesteuert. Zur Überwachung der Schmelztemperatur ist wenigstens ein Temperatursensor 22 vorgesehen.

## Patentansprüche

1. Vorrichtung zum Extrudieren von thermoplastischem Kunststoffgut, mit einer in einem Gehäuse (1) gelagerten Extruderschnecke (2), die einen zulaufseitigen Plastifizierungsabschnitt (P) und einen einem Austragsabschnitt (A) vorgelagerten Entgasungsabschnitt (E) umfaßt, mit einem Messbehälter (9) für das Kunststoffgut und mit einer Steuereinrichtung (6), **dadurch gekennzeichnet, daß** dem dem Extruder nachgeordneten Meßbehälter (6) eine Waage (10) zur Bestimmung des Schüttgewichtes des vom Extruder (1) produzierten Kunststoffgranulates zugehört und daß die Steuereinrichtung (6) den Extruder (1) in Abhängigkeit des jeweils ermittelten Schüttgewichtes zwecks Einstellung der zur Erzielung einer gewünschten Entgasungsleistung erforderlichen Parameter ansteuert.

2. Vorrichtung nach Anspruch 1, **dadurch gekennzeichnet, daß** der nach unten offene Meßbehälter (9) bodenseitig mit einem von der Steuereinrichtung (6) betätigbaren Verschluß (16) ausgestattet ist.

3. Vorrichtung nach Anspruch 1 oder 2, **dadurch gekennzeichnet, daß** der Meßbehältereinfüllöffnung eine Abstreifeinrichtung (17) zugehört, die bei Ansteuerung durch die Steuereinrichtung (9) den oberen Behälterrand überragendes Kunststoffgranulat entfernt.

4. Vorrichtung nach einem der Ansprüche 1 bis 3, **dadurch gekennzeichnet, daß** der Außenmantel des Meßbehälters (9) nach unten hin stromlinienförmig ausgebildet ist.

5. Vorrichtung nach einem der Ansprüche 1 bis 4, **dadurch gekennzeichnet, daß** der Meßbehälter (9) neben einem Transportkanal (11) für das Kunststoffgranulat angeordnet ist, wobei im Transportkanal (11) eine von der Steuereinrichtung (6) ansteuerbare Weiche vorgesehen ist, deren Abzweigung in den Meßbehälter (9) mündet.

6. Vorrichtung nach einem der Ansprüche 1 bis 5, **dadurch gekennzeichnet, daß** der Meßbehälterauslaß und der Transportkanal (11) für das Kunststoffgranulat über eine Weiche (14) in eine Aufgabevorrichtung (12) für den Extruder münden, wobei die Weiche (14) zum Abzweigen von unzureichend entgastem Kunststoffgranulat vorgesehen ist.

7. Vorrichtung nach einem der Ansprüche 1 bis 6, **dadurch gekennzeichnet, daß** dem Meßbehälter (9) eine Ausblaseinrichtung (19) zugehört.

8. Verfahren zum Betreiben einer Vorrichtung nach einem der Ansprüche 1 bis 7, **dadurch gekennzeichnet, daß** zumindest ein Teil des vom Extruder produzierten Kunststoffgranulates in den Meßbehälter eingeleitet, das jeweilige Schüttgewicht bestimmt und anschließend die Beschickungseinrichtung des Extruder, die Drehzahl der Extruderschnecke, die Heiz- bzw. Kühlvorrichtung des Extruders und gegebenenfalls eine dem Entgasungsabschnitt zugeordnete Vakuumpumpe in Abhängigkeit des gemessenen Schüttgewichtes zwecks Einstellung der benötigten Entgasungsleistung angesteuert werden.
